# EUROPEAN PATENT APPLICATION

(11) **EP 1 488 693 A2**
(43) Date of publication of application: **22.12.2004**
(21) Application number: 04013588.1
(22) Date of filing: 09.06.2004
(51) Int. Cl.: A01K 5/01

(54) **Feeding trough for transport**

(30) Priority: 17.06.2003 US 462694
(71) Applicant: OK PLAST, 8700 Horsens (DK)
(72) Inventor: Hansen, John Falck, 8000 Aarhus C (DK)
(74) Representative: Gregersen, Niels Henrik

(57) **Abstract**

The present invention relates to a receptacle preferably in form of a trough for feeding domestic animals, comprising one rear wall part, and at least one other wall part, and a bottom part, and suspension means, where said rear wall part and said other wall part are interconnected by curved corner parts, and said suspension means are positioned at an upper part of said rear wall part and are extending outwards from said rear wall part forming a fold back part, and said suspension means are provided with reinforced areas extending along a substantial length of said suspension means, wherein said reinforced areas of said suspension means are provided as a curved continuation of said curved corner parts.

## Description

### Field of the invention

The present invention relates to a receptacle preferably in form of a trough for feeding domestic animals, comprising one rear wall part, at least one other wall part, a bottom part, and suspension means, where said rear wall part and said other wall part are interconnected by curved corner parts, and said suspension means are positioned at an upper part of said rear wall part and are extending outwards from said rear wall part forming a fold back part, and said suspension means are provided with reinforced areas extending along a substantial length of said suspension means, wherein said reinforced areas of said suspension means are provided as a curved continuation of said curved corner parts.

### Background of the invention

When domestic animals like for example horses are displayed at horse shows or participate in horse races or the like, the horses are transported in a horsebox from the stable of the owner to the location of the show or race.

At larger events the horses are stabled in separate horseboxes provided by the organizers during the entire show/race, but at smaller events the horses are stabled in the owner's horsebox. Either way, the horses need feeding at a regular basis in order to provide the best performance possible or to avoid fatigue or stress.

Typically, it is the responsibility of the owners to provide their own receptacle or trough for watering and/or feeding of the horse.

One kind of receptacle or trough used is a loose bucket, which is positioned inside the horsebox during the period when the horse is eating or drinking. The disadvantage of using a loose bucket is that the horse, when feeding, easily can turn over the bucket and waste the feed or water, and the horse would then stand in a soiled stable. Furthermore, is very possible that the horse would bite or walk on the empty bucket, thus damaging it. It is, therefore, necessary for the owner to supervise the horse during feeding or to hold the bucket.

Another kind of receptacle or trough used is mounted on a mounting placed inside the horsebox/loosebox. The disadvantage of using a trough fixed on a mounting inside horsebox/loosebox is that the horse, when not feeding, can damage the trough by biting or get injured by accidentally moving into edge parts or handle of the trough. To avoid this, the trough has to be removed each time the horse has been feed or watered.

The third kind of receptacle or trough used is a trough which has suspension means for hanging between the bars of the horsebox/loosebox. The known trough is either provided with metallic mountings or cast in a plastic material.

The disadvantage of using a trough with metallic appendage like mountings, handles or reinforcements is that the horse can injure it self on them. Furthermore, the trough requires an added time consuming step during the manufacturing process, namely when the appendage is mounted to the trough. In addition to this, the trough with metallic appendage has an increased weight.

In the company's product line for horse articles OK Plast has a portable plastic cast trough with a handle, which can hang over a sidewall of a horsebox. The disadvantage of this trough is that the trough is formed with the handle positioned right between the suspension means in such a manner that it is impossible to mount a trough of this kind in a horsebox/loosebox with a sidewall provided with bars, because the handle prevents the suspension means from being mounted between the bars so the trough is positioned in a secure way up against the sidewall of the horsebox/loosebox.

The trough has, furthermore, the disadvantage that is has a weak point between the suspension means and the rear wall part, because the reinforcement areas do not continue down the rear wall part. Only the material thickness provides the strength.

### Object of the invention

It is an object of the present invention to address the aforementioned problems by providing a receptacle which is easy to produce, applicable for feeding domestic animals stabled in a horsebox/loosebox with bars, and which has sufficient strength throughout the suspension means and into the rear back wall part and, furthermore, is easy to ship from factory to the place of sale.

This is obtained with a receptacle as described in the preamble of claim 1 and wherein the reinforced areas of the suspension means are provided as a curved continuation of the curved corner parts.

### Summary of the invention

To be able to contain a certain amount of feed or water the receptacle is formed with a one rear wall part, to which the suspension means are connected, and at least one other wall part, and a bottom part.

The rear wall part is, in an embodiment of the invention, a strait wall part where the other wall part is interconnected by curved corner parts. The other wall part can be a curved wall part or consist of a number of strait wall parts, which are interconnected by curved corner parts.

To avoid sharp corners of the receptacle, which makes the receptacle hard to empty for an animal, all the connections parts between said wall parts and bottom parts are interconnected with curved corner parts. Furthermore, a receptacle with curved corner parts is easier to cast and to clean.

In order to be able to hang the receptacle on a side wall of a horsebox/loosebox with bars, the suspension means are positioned at an upper part of the rear wall part and extend outwards from the rear wall part forming a fold back part.

To ensure that the suspension means has the strength to hold the receptacle, inclusive the feed or water, the suspension means are provided with reinforced areas extending along a substantial length of the suspension means.

In a preferred embodiment of the invention the reinforced areas of the suspension means are provided as a curved continuation of the curved corner parts.

By forming the reinforced areas as a curved continuation of said curved corner parts it is possible to manufacture the receptacle from a reduced amount of plastic material and with a reduced weight in comparison with receptacles where the reinforced areas are formed for example as a bead extending along a substantial length of the suspension means.

The curved continuations furthermore provide the receptacle with a more appealing look, because it is possible to provide the receptacle with a lighter design.

By avoiding reinforced areas as beads or metallic bars, the receptacle is easier to clean for example by washing, because the curved continuations do not provide any hidden corners or areas which only can be cleaned with a brush or the like.

In order to be able to manufacture a mould for casting a receptacle with reinforced areas as a curved continuation of the curved corner parts, calculations and tests have shown that the optimal form is achieved when the curved continuation has the same configuration as that of the corners parts. This means that the mould is more economical to manufacture because it is not necessary to provide the mould with steps for changing the thickness or dimensions of the curved continuation in proportion to the curved corner parts.

The configurations are typically the diameter of the circle part forming the curved continuation and the curved corner parts.

The strength of the reinforced areas is obtained by forming the curved continuation as a part of a circle, which has a great strength against bending. In the preferred embodiment of the invention the circle part is a quarter of a circle, because this form enables the mould to easily form the curved and to be separated and removed without problems by turning the mould.

The reinforced areas formed as the curved continuation of the corners parts prevent the receptacle from having a weak point in the passage between the suspension means and the rear wall part, because the curved continuation is adapted to withstand any vertical and horizontal forces.

The cost of setting up a production of the receptacle at every local marked interested in receptacle exceeds the cost of manufacturing the receptacle at a central factory and then transporting it to the wanted locations.

The cost of transporting the manufactured receptacles is, therefore, an important price parameter. The manufacturer, thus, wants to be able to stack and pack as many receptacles as possible in, for example, a container.

In order to be able to optimize the stacking of the receptacles, the cross-section of the receptacle is preferably rectangular or square. It is the possible to stack the receptacles by turning every second receptacle 180 degrees, thus avoiding that the suspension means of the receptacles cause a tight stacking. If the cross-section is square, it is possible to stack the receptacles by turning every second receptacle 90 degrees.

This is a significant improvement in comparison to the former trough where is only possible to stack approximately 7,000 receptacles in a container. With the new form/design of the receptacle it is possible to stack up to 10,000 receptacles in a container, which significantly reduces the cost of transportation, thereby reducing the cost of a single receptacle for the customer.

In order to be able to stack the receptacles in aforementioned way and to be able manufacture a receptacle with the necessary strength throughout the suspension means and the rear wall part, an upper part of the suspension means is positioned at a level similar to that of an upper part of the other wall part. This allows the manufacturer to manufacture a receptacle without providing any weak areas, where the edge might rupture in the passage between the corner parts and the other wall part.

To avoid that the rear wall part prevents the casting of the suspension means as a natural continuation of the corner parts between the rear wall part and the other wall part, an upper part of the rear wall part is positioned at a level lower than that of an upper part of the other wall part. This allows the same configuration of the curved continuation as the corner parts and allows the suspension means to curve outwards from the rear wall part without providing any weak areas between the suspension means and the rear wall part.

To obtain strength throughout the suspension means and the rear wall part forms, the curved continuation is a connection between the upper part of the rear wall part and an upper part of the other wall part.

This allows the upper edge of the other wall part to continue in a naturally curved bend downwards into the suspension means while the curved continuation forms a fixed connection to the upper part of the rear wall part, whereby it is possible to utilize the strength of the rear wall part to help withstand any vertical or horizontal forces on the suspension means.

When the receptacle is filled with feed or water, the weight of the receptacle is substantial and the receptacle is not easily carried or handled. In a preferred embodiment of the invention a carrier handle is provided between the suspension means. It is then possible to fill the receptacle, grip the carrier handle and easily carry the receptacle in one hand.

The carrier handle is formed with trimmed edge part so that it is comfortable to carry a full respectable without hurting the hand. Alternatively, it is possible to manufacture a protective appendage, like a rubber pad, mounted inside the carrier handle.

To prevent the same disadvantage as with the formerly manufactured trough, where the handle prevents the position of a receptacle on a sidewall with bars as well as an effective stacking, the carrier handle is connected to the upper part of the rear wall part by a cranked wall part.

The cranked wall part ensures that the carrier handle is positioned in a horizontal distance from the rear wall part, whereby room is provided for stacking the next receptacle such that the lower part of the curved continuation of the second receptacle touches the upper part of the other wall part of the first receptacle.

In the casting process it is common to use air or a hydraulic cylinder in connection with the mould. The use of air or a hydraulic cylinder complicates the casting process and increases the cost of casting, so the manufacturer tries to form the product using as simple a mould as possible. Therefore, the carrier handle extends in a substantially upright position in a pointed angle in relation to the rear wall part.

Furthermore, the upright position in a pointed angle in relation to said rear wall part of the carrier handle will make it easier and more comfortable to carry the receptacle, because the slight tilt of receptacle will bring the centre of gravity closer to the person carrying the receptacle.

The receptacle is described used for horseboxes/looseboxes, but the receptacle can, furthermore, be used as for example a trough for other domestic animals like cows, pigs and sheep, or in other areas where it is necessary to hang a box on a rail, sidewall or the like, for example as a portable toolbox or a flowerbox.

To be able to provide a receptacle with a carrier handle independently of the form of the suspension means the receptacle is preferably in form of a trough for feeding domestic animals, comprising one rear wall part, and at least one other wall part, and a bottom part, and suspension means, where said rear wall part and said other wall part are interconnected by curved corner parts, and said suspension means are positioned at an upper part of said rear wall part and are extending outwards from said rear wall part forming a fold back part, and said suspension means are provided with reinforced areas extending along a substantial length of said suspension means, wherein a carrier handle is provided between to said suspension means, said handle is extending in a substantial upright position in a pointed angle in relation to said rear wall part.

### Brief description of the drawing

The invention will now be described further with reference to the accompanying drawing, where:
- fig. 1: shows a rear perspective of a receptacle according to the invention,
- fig. 2: shows a front perspective of a receptacle according to the invention, and
- fig. 3: shows a rear perspective of a other embodiment of the receptacle according to the invention.

### Detailed description of the invention

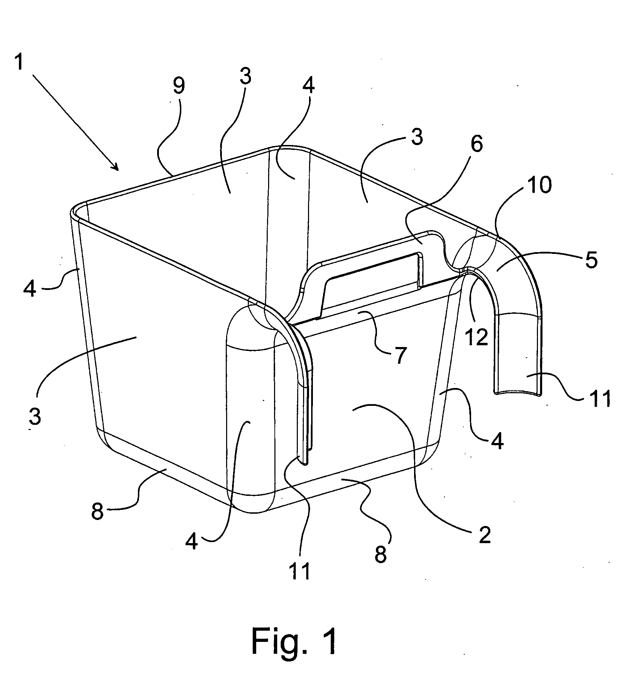

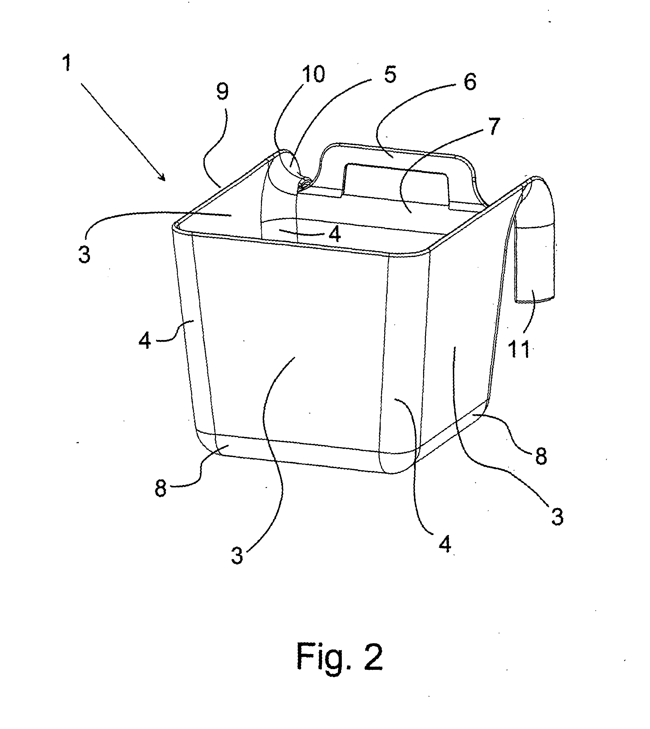

Fig. 1 and 2 shows a receptacle **1** according to the invention with a rear wall part **2**, and three other wall parts **3**, and a bottom part (not shown), which form a receptacle **1** with a square cross-section.

The rear wall part **2** and three other wall parts **3** are interconnected by curved corner parts **4**, while the bottom part (not shown) is interconnected by curved corner parts **8** to the wall parts **3**, **4**. This means that there is no sharp edges inside the receptacle **1** and that the receptacle, therefore, is easy to empty and/or clean.

The suspension means **5** are provided as a curved continuation of the curved corner parts **4**, with the same configuration and here shown as a quarter circle.

The upper edge **9** of the other wall parts **3** is positioned at a level similar to that of an upper part **10** of the suspension means **5** and the curved continuation connects the upper part **10** with upper part **7** of the rear wall part **2**.

The carrier handle **6** is positioned between the suspension means **5** and is connected to the rear wall part **2** by the cranked rear wall part **7**. This allows the suspension means to extend outwards from the rear wall part **2** and form the fold back parts **11**, whereby the receptacle **1** can be mounted on a sidewall (not shown).

The carrier handle **6** is, furthermore, positioned in a substantially upright position in a pointed angle in relation to the rear wall part **2**, which together with the cranked rear wall part **7** allows the stacking of a number of receptacles **1**, where every second receptacle is rotated either 90 or 180 degrees, whereby the lower part **12** of the suspension means **5** touch the upper part **9** of the other wall part **3**.

The cranked wall part **7** is formed like a curve, and it follows the suspension means' **5** curved continuation of the curved corner **4**.

All the passage between the rear wall part **2**, the cranked wall part **7** and the suspension means **5** is formed as curved passages without any sharp edges or weak areas, whereby the possibility of edge rupture is reduced significantly.

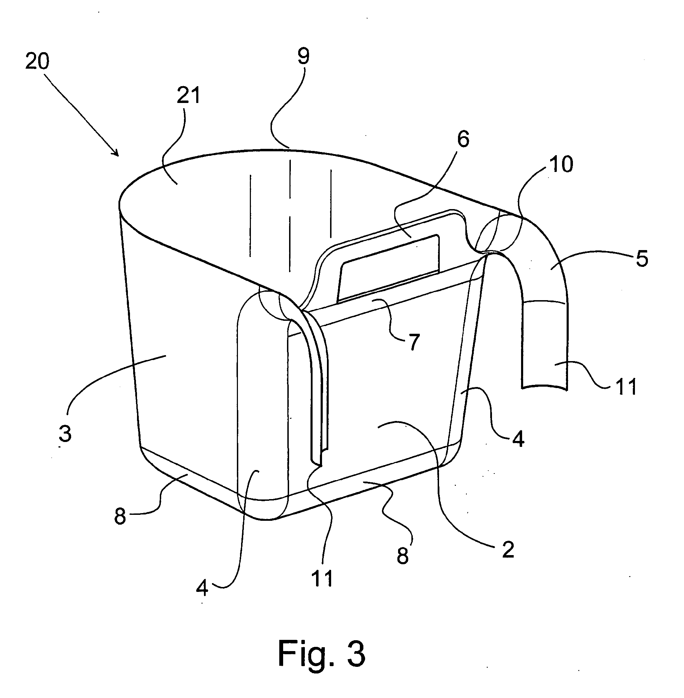

Fig. 3 shows a receptacle **20** according to the invention with a rear wall part **2**, and one curved other wall part **3**, and a bottom part (not shown), which form a receptacle **20** with a mainly square cross-section with one arch side **21**.

### Examples of the invention

In an embodiment of the invention has the receptacle the following dimensions:
- Wall parts **3** have a width of 280 mm.
- Wall parts **3** have a height of 280 mm.
- Rear wall part **2** has a width of 280 mm.
- Rear wall part **2** has a height of 250 mm.
- The distance between the suspensions means **5** is 216 mm.
- The cranked wall part **7** offsets the carrier handle horizontal up to 20 mm. from the rear wall part **2**.
- The circle diameter of the corner parts **4** and the curved continuation are 25 mm.
- The circle diameter of the passage of the suspension means **5** outwards from the rear wall part **2** is 60 mm.

The dimensions of the receptacle can be easily be scaled up and down, but it is important that the distance between the suspension means **5** is adjusted to comply with a sidewall with bars, where the standard distance between the bars are 65-80 mm and the bars are typically 1" or 3/4" rods.

The distance of 216 mm. between the suspension means **5** on the provided receptacle **1** are found to be adaptable with a large number of combinations of the aforementioned standard distances and rod diameters.

## Claims

1. Receptacle preferably in form of a trough for feeding domestic animals, comprising one rear wall part, and at least one other wall part, and a bottom part, and suspension means, where said rear wall part and said other wall part are interconnected by curved corner parts, and said suspension means are positioned at an upper part of said rear wall part and are extending outwards from said rear wall part forming a fold back part, and said suspension means are provided with reinforced areas extending along a substantial length of said suspension means, wherein said reinforced areas of said suspension means are provided as a curved continuation of said curved corner parts.

2. Receptacle according to claim 1, wherein said curved continuation is formed as a part of a circle.

3. Receptacle according to claim 2, wherein said curved continuation has the same configurations as that of said corners parts.

4. Receptacle according to claim 1, wherein a cross-section of said receptacle preferably is rectangular.

5. Receptacle according to claim 4, wherein an upper part of said suspension means is positioned at a level similar to that of an upper part of said other wall part.

6. Receptacle according to claim 5, wherein an upper part of said rear wall part is positioned at a level lower than that of an upper part of said other wall part.

7. Receptacle according to claim 4 and 5, wherein said curved continuation forms a connection between said upper part of said rear wall part and an upper part of said other wall part.

8. Receptacle according to claim 1, wherein a carrier handle is provided between said suspension means.

9. Receptacle according to claim 8, wherein said carrier handle is connected to said upper part of said rear wall part by a cranked wall part.

10. Receptacle according to claim 8 and 9, wherein said carrier handle is extending in a substantial upright position in a pointed angle in relation to said rear wall part.

11. Receptacle preferably in form of a trough for feeding domestic animals, comprising one rear wall part, and at least one other wall part, and a bottom part, and suspension means, where said rear wall part and said other wall part are interconnected by curved corner parts, and said suspension means are positioned at an upper part of said rear wall part and are extending outwards from said rear wall part forming a fold back part, and said suspension means are provided with reinforced areas extending along a substantial length of said suspension means, wherein a carrier handle is provided between said suspension means, said handle is extending in a substantial upright position in a pointed angle in relation to said rear wall part.
